# EUROPÄISCHE PATENTSCHRIFT

(11) **EP 3 912 233 B1**
(45) Veröffentlichungstag und Bekanntmachung des Hinweises auf die Patenterteilung: **27.05.2026**
(21) Anmeldenummer: 20705612.8
(22) Anmeldetag: 10.01.2020
(51) Int. Cl.: H01R 43/048, B30B 15/00, B30B 7/04

(54) **VERFAHREN UND VORRICHTUNG ZUR ÜBERPRÜFUNG DER QUALITÄT EINER CRIMPUNG**
METHOD AND DEVICE FOR CHECKING THE QUALITY OF A CRIMPING
PROCÉDÉ ET DISPOSITIF POUR LE CONTRÔLE DE LA QUALITÉ D'UN SERTISSAGE

(30) Priorität: 16.01.2019 DE 102019101016
(43) Veröffentlichungstag der Anmeldung: 24.11.2021
(73) Patentinhaber: HARTING Electric Stiftung & Co. KG, 32339 Espelkamp (DE)
(72) Erfinder: RIECHMANN, Till, 32351 Stemwede (DE); LOSKE, Felix, 32425 Minden (DE); KNOP, Maren, 32130 Enger (DE)
(86) Internationale Anmeldenummer: PCT/DE2020/100017
(87) Internationale Veröffentlichungsnummer: WO 2020/147889

(56) Entgegenhaltungen:
- EP-A1- 0 460 441
- EP-A1- 0 902 509
- DE-A1- 4 038 653
- DE-A1- 4 337 796
- US-A- 5 197 186
- US-A1- 2010 139 351
- US-A1- 2014 041 200

## Beschreibung

Die Erfindung betrifft ein Verfahren zur Überprüfung der Qualität einer Crimpung sowie eine zur Durchführung des Verfahrens geeignete Vorrichtung.

Beim Crimpen werden mittels einem Formwerkzeug zwei Komponenten unter Einsatz einer Presskraft durch plastisches Verformen miteinander verbunden. Dabei wird eine Crimpung, das heißt eine schwer lösbare mechanische Verbindung zwischen einem Leiter und einem Verbindungselement, wie beispielsweise einem Stecker oder einer Hülse, erzielt.

Beim Herstellen der Crimpung ist für eine dauerhafte mechanisch und elektrisch stabile Verbindung zwischen den vercrimpten Komponenten eine hohe Qualität der Crimpung wünschenswert. Eine Crimpung mit einer mangelhaften Qualität kann insbesondere durch einen fehlerhaften Crimp-Rohling und auch durch Bedienfehler an einer Crimpvorrichtung, wie beispielsweise einer falsch eingestellten Crimphöhe verursacht sein.

Eine Qualitätssicherung einer Crimpverbindung erfolgt herkömmlich meist durch Vermessen der Crimptiefe, durch eine optische Beurteilung eines Schliffbildes und/oder durch eine Kraft/Weg Überwachung während des Crimpens.

### Stand der Technik

Die WO 2012/110310 A1 schlägt eine vorstehend erwähnte Kraft/Weg Überwachung während des Crimpens vor. Ein Crimp-Rohling wird dabei durch ein Formwerkzeug plastisch verformt. Insbesondere beim Zurückfahren des Formwerkzeugs wird sowohl die Kraft, die das Formwerkzeug auf den Crimp-Rohling ausübt, als auch der Weg, um den sich das Formwerkzeug verlagert, gemessen. Eine Wegänderung zwischen einer Position bei Maximalkraft und einer erstmals kräftefreien Position wird als Indikator für eine elastische Rückverformung des Crimp-Rohlings verwendet. Dieser Indikator wird als Maß für die Qualität der hergestellten Crimpung vorgeschlagen.

Für eine zuverlässige Verwendung dieses Indikators zur Qualitätssicherung ist jedoch eine sehr genaue Messung der Wegänderung erforderlich, weshalb die Wegmessung mittels einer nachteilhaft aufwendigen und kostspieligen Laserabstandsmessung erfolgt.

Das Deutsche Patent- und Markenamt hat in der Prioritätsanmeldung zu vorliegender Anmeldung den folgenden Stand der Technik recherchiert: EP 0 873 582 B1; Grundlagen der Crimptechnik - Qualitätskontrolle; DE 10 2007 063 669 A1; DE 40 38 658 C2 und DE 43 37 796 A1.

Aus der DE 43 37 796 A1 ist ein Verfahren zum Überwachen der Qualität einer Crimpung bekannt, das ohne zusätzliche Wegmesssysteme eine Überwachung des Kraftverlaufs während des gesamten Crimpvorgangs ermöglichen soll. Dazu werden die Kraftverläufe einer Mehrzahl von Referenzmessungen über einen Sensor als Messkurven erfasst und abgespeichert. Die einzelnen Messkurven werden anschließend normiert, indem sie entlang der Zeitachse derart verschoben werden, dass sie bezüglich der Maximalwerte der Kraft zur Deckung kommen. Aus diesen normierten Messkurven wird nun eine gemittelte Messkurve gebildet. Zur Erzeugung eines Toleranzbandes werden z. B. eine obere und eine untere äquidistante Kurve an die gemittelte Messkurve angelegt. Die Überwachung der einzelnen Crimpvorgänge erfolgt durch Prüfung, ob die ermittelten Messkurven innerhalb des gespeicherten Toleranzbandes liegen. Die Referenzmesskurven werden bezüglich ihrer Kraftmaximalwerte auf der Zeitachse übereinandergelegt, wobei die einzelnen Messungen nicht exakt in Abhängigkeit vom Weg des Pressstempels durchgeführt werden.

Aus der DE 40 38 653 A1 ist ein Verfahren zur Überwachung der Qualität einer B-Crimpverbindung bekannt. Die Qualität einer Crimpverbindung, die durch Ausübung einer Crimpkraft auf eine Crimphülse eines elektrischen Anschlusses mit einem darin enthaltenen Draht erzeugt wird, wird überwacht durch Messen des Spitzenwerts der Crimpkraft und Vergleichen derselben mit einem Bezugswert. Die Inkrementwerte der Crimpkraft werden während der Ausübung derselben gemessen und in Form einer den tatsächlichen Crimpkraftwert wiedergebenden ersten Kurve gespeichert. Die Inkrementwerte einer idealen Crimpkraft werden während der Ausübung derselben gemessen und in Form einer den idealen Crimpkraftwert wiedergebenden zweiten Kurve gespeichert. Die ersten und zweiten Kurven werden dann zur Feststellung der Qualität der Crimpverbindung miteinander verglichen.

Aus der EP 0 902 509 A1 ist Verfahren zur Bestimmung der Qualität einer Crimpverbindung zwischen einem Leiter und einem Kontakt, bekannt, wobei eine Crimpeinrichtung eine Crimpkraft erzeugt, mittels welcher der Kontakt mit dem Leiter elektrisch und mechanisch unlösbar verbindbar sind. Der Verlauf einer Referenzcrimpkraft wird in mehrere Zonen eingeteilt, und der Verlauf der Crimpkraft wird je Zone in Bezug auf den Verlauf der Referenzcrimpkraft ausgewertet. Aus dem Ergebnis der Auswertung werden Fehlermeldungen und Aussagen über die Qualität der Crimpverbindung getroffen.

Aus der der auch als US 5,197,186 veröffentlichten EP 0 460 441 A1 ist ein Verfahren zum Bestimmen der Qualität einer Crimpverbindung eines auf einen Draht gecrimpten elektrischen Anschlusses bekannt. Während des Crimpvorgangs wird das Ausmaß der Verformung des Anschlusses zusammen mit dem entsprechenden Ausmaß der zur Bewerkstelligung der Verformung erforderlichen Kraft für mehrere unterschiedliche Verformungsbeträge gemessen, um dadurch eine Anzahl gemessener Kraft- und Verformungs-Datenelementpaare mit einem Kraftwert und einem Anschlssverformungswert zu definieren. Es wird eine Anzahl von Standard-Datenelementpaaren vorgesehen, die einer Crimpverbindung bekannter Qualität entsprechen. Ausgewählte der gemessenen Datenelementpaare werden mit entsprechenden der mehreren Standard-Datenelementpaare in Beziehung gesetzt, um dadurch die Qualität der Crimpverbindung des gecrimpten Anschlusses zu bestimmen. Bei der Crimpverbindung handelt es sich wie bei der DE 40 38 653 A1 und der EP 0 902 509 A1 ebenfalls um eine B-Crimpverbindung.

Aus der US 2010/0139351 A1 ist ein Verfahren zur Bestimmung der Qualität einer Crimpverbindung zwischen einem Leiter und einem Kontakt bekannt, bei dem zunächst mittels einer Crimpeinrichtung eine Crimpkraft auf den Leiter und den Kontakt ausgeübt wird. Aus der sich während des Crimpens ergebende Crimpkraftkurve wird eine normalisierte Kraft-Weg Crimpkraftkurve abgeleitet und eine Kompressionsfläche ermittelt, die unter einer Referenzcrimpkraftkurve liegt. Die Crimpkraftkurve und die Referenzcrimpkraftkurve werden in mehrere Zonen aufgeteilt, wobei die Aufteilung unter Berücksichtigung der Grösse der Kompressionsfläche erfolgt. Eine weitere unter der Crimpkraftkurve liegende Fläche wird ermittelt und verwendet, um auf die Qualität der Crimpverbindung zu schliessen, bei der es sich ebenfalls um eine B-Crimpverbindung handelt.

### Aufgabenstellung

Die Aufgabe der Erfindung besteht darin, ein zuverlässiges und kostengünstiges Verfahren zur Überprüfung der Qualität einer Crimpung sowie eine zur Durchführung des Verfahrens geeignete Vorrichtung bereitzustellen. Dabei ist insbesondere Aufgabe der Erfindung ein Verfahren zur Überprüfung der Qualität einer Indent-Crimpung von insbesondere einer gedrehten Kontakthülse und einem Kabel und insbesondere einer Vierdorn-Crimpung anzugeben.

Die Aufgabe wird durch die Merkmale der Ansprüche gelöst.

Die vorliegende Erfindung betrifft insbesondere ein Verfahren V zur Überprüfung der Qualität einer Crimpung eines vorbestimmten Kabels mit einer vorbestimmten gedrehten Kontakthülse und mit einer vorbestimmten Crimphöhe mit einer Indent-Crimpeinheit (2) einer Crimpvorrichtung, unter Verwendung einer Sensorik zur Messung einer Kraft und eines Wegs einer Einrichtung zur Betätigung und/oder Druckbeaufschlagung der als Indent-Crimpeinrichtung ausgebildeten Crimpeinheit und einer Auswerteelektronik, wobei während des Crimpens eine Kraft/Weg-Kurve erfasst und auf einem Bildschirm angezeigt wird.

Die erfasste Kraft/Weg-Kurve wird außerdem mit einem gespeicherten Referenzmodell wenigstens einer Referenzmessung verglichen, wobei das Referenzmodell eine erste und zweite Hüllkurve aufweist, die einen Toleranzbereich begrenzen. Dabei wird das Referenzmodell zusammen mit der Kraft/Weg-Kurve auf dem Bildschirm angezeigt. Das Referenzmodell ist mittels einem nachfolgend beschriebenen erfindungsgemäßen Verfahren VM erstellt.

Ein Abgleich der Kraft/Weg-Kurve mit dem Referenzmodell wird durchgeführt, wobei ermittelt wird, ob die Kraft/Weg-Kurve in dem Toleranzbereich liegt, und aus dem Abgleich wird eine Aussage über die Qualität der Crimpung getroffen. Der Abgleich kann automatisiert erfolgen und/oder auch von einer Bedienperson durchgeführt werden, wenn klar ersichtlich ist, dass die Kraft/Weg-Kurve von einer Kraft/Weg-Kurve einer Crimpung mit wünschenswerter Qualität abweicht.

Die Qualität der Crimpung entspricht dabei einer vorbestimmten wünschenswerten Qualität, wenn die Kraft/Weg-Kurve in dem Toleranzbereich liegt, und die Qualität der Crimpung wird verneint, wenn die Kraft/Weg-Kurve zumindest teilweise außerhalb des Toleranzbereichs liegt.

Mittels der vorteilhaften gemeinsamen Darstellung der gemessenen Kraft/Weg-Kurve der Crimpung zusammen mit dem Referenzmodell ist es einer Bedienperson gestattet, jederzeit auch einen automatisiert erfolgenden Abgleich zu überwachen.

Aus einem insbesondere auch automatisierten Abgleich der Kraft/Weg-Kurve mit dem Referenzmodell kann dabei besonders vorteilhaft insbesondere eine qualitative Fehleranalyse der Crimpung abgeleitet werden. Auf diese Weise ist es möglich Fehlerursachen, wie beispielsweise Bedienfehler, Materialmängel und insbesondere auch eine technische Störung der verwendeten Crimpvorrichtung zu erkennen und zeitnah und kostengünstig zu beheben. Die qualitative Fehleranalyse kann dabei unter Verwendung von gespeicherten Informationen über die Bewertung von Kraft/Weg-Kurven von fehlerhaften Crimpungen durchgeführt werden.

Bei automatisiertem Abgleich kann aus der Kraft/Weg-Kurve vorteilhaft eine qualitative Analyse mit Ermittlung einer Fehlerwahrscheinlichkeit durchgeführt werden. Beispielsweise kann eine qualitative und insbesondere automatisierte Analyse zu dem Ergebnis führen, dass ein zu großer Crimp-Rohling mit einer zu großen Kontakthülse verwendet wurde, oder dass beim Abisolieren eines Kabels oder beim Einführen eines Kabels in eine Kontakthülse die Litze des Kabels beeinträchtigt wurde. Das Ergebnis der Analyse kann geeigneter Weise und vorteilhaft zusammen mit der Kraft/Weg-Kurve auf dem Bildschirm angezeigt werden.

Neben dem vorstehenden Verfahren V betrifft die Erfindung weiterhin insbesondere ein Verfahren VM zur Erstellung eines Referenzmodells zur Überprüfung der Qualität einer Crimpung eines vorbestimmten Kabels mit einer vorbestimmten gedrehten Kontakthülse und mit einer vorbestimmten Crimphöhe mit einer Indent-Crimpeinheit einer Crimpvorrichtung, unter Verwendung einer Sensorik zur Messung einer Kraft und eines Wegs einer Einrichtung zur Betätigung und/oder Druckbeaufschlagung einer Crimpeinheit und einer Auswerteelektronik, wobei während des Crimpens eine Kraft/Weg-Kurve erfasst und auf einem Bildschirm angezeigt wird.

Das Verfahren VM ist dabei insbesondere zur Erstellung eines Referenzmodells für das vorstehend beschriebene Verfahren V der Erfindung geeignet.

Bei dem Verfahren VM wird in einem ersten Schritt eine Crimpung eines Kabels mit einer Kontakthülse durchgeführt und eine Kraft/Weg-Kurve der Crimpung erfasst und auf dem Bildschirm angezeigt. In einem zweiten Schritt wird die Qualität der Crimpung von einer Bedienperson mittels Augenschein und/oder unter Verwendung von geeigneten Prüfmitteln bewertet. Beispielsweise kann die Bewertung optisch insbesondere mittels Begutachtung eines Schliffbilds eines Schnitts durch die Crimpung oder einer Widerstandsmessung durchgeführt werden.

Bei einer positiv bewerteten Crimpung mit vorbestimmter Qualität wird in einem dritten Schritt des Verfahrens VM die Kraft/Weg-Kurve für eine Kurvenschar mit einer vorbestimmten Anzahl n von Kraft/Weg-Kurven vorgesehen. Durch diese Maßnahme ist es vorteilhaft möglich, voneinander abweichende Kraft/Weg-Messungen aufgrund von beispielsweise Messtoleranzen zu berücksichtigen. Die Bereitstellung einer Kurvenschar ist dabei zur Ermittlung eines nachfolgend beschriebenen Toleranzbereichs besonders geeignet.

Der vorstehende erste, zweite und dritte Schritt des Verfahrens VM wird in einem vierten Schritt mit einem weiteren Kabel und einer weiteren Kontakthülse wiederholt, bis die vorbestimmte Anzahl n von Kraft/Weg-Kurven erreicht ist.

Versuchsreihen haben ergeben, dass eine vorbestimmte Anzahl von bereits n = 3 zufriedenstellende Ergebnisse für Crimpungen mit dem vorstehend beschriebenen Verfahren V insbesondere auch bei automatisiert durchgeführten Abgleichen liefert. Zur Ermittlung eines Toleranzbereichs von wünschenswerter Genauigkeit bei vertretbarem Aufwand für die Erstellung des Referenzmodells ist bevorzugt eine vorbestimmte Anzahl von n >= 5 und besonders bevorzugt n = 10 geeignet.

Ein vorstehend erwähnter Toleranzbereich kann in einem fünften Schritt besonders vorteilhaft unter Berücksichtigung der vorbestimmten Anzahl n der Kraft/Weg-Kurven bereitgestellt werden. Auf einfache Weise kann eine erste und zweite Hüllkurve ermittelt werden, die die Kurvenschar der Kraft/Weg-Kurven begrenzen und darüber hinaus den Toleranzbereich definieren.

Hierbei kann der Toleranzbereich vorteilhaft variabel in Abhängigkeit des Wegs und/oder der Kraft festgelegt sein, wonach eine besonders genaue Beurteilung einer Crimpung und der sie kennzeichnenden Kraft/Weg-Kurve möglich ist.

Bei der vorstehenden Festlegung des Toleranzbereichs kann weiterhin geeigneter Weise eine vorbestimmte Toleranz und/oder eine vorbestimmte Qualität und/oder das vorbestimmte Kabel und/oder die vorbestimmte Kontakthülse und/oder eine vorbestimmte Crimphöhe und/oder die vorbestimmte Anzahl n berücksichtigt werden. Auf diese Weise ist die Möglichkeit geschaffen, einen Toleranzbereich besonders exakt zu bestimmen und außerdem zu optimieren und individuell anzupassen.

In einem sechsten Schritt wird die erste und zweite Hüllkurve und/oder der Toleranzbereich und/oder die Kurvenschar von Kraft/Weg-Kurven mit der Anzahl n als Referenzmodell zur Durchführung einer Crimpung zur Verwendung in dem vorstehend beschriebenen Verfahren V insbesondere auch zur gemeinsamen Anzeige des Referenzmodells mit einer erfassten Kraft/Weg-Kurve einer Crimpung auf einem Bildschirm aufgezeichnet bzw. gespeichert.

In dem vorstehenden sechsten Schritt können zusammen mit dem Referenzmodell weitere das Referenzmodell und/oder eine Crimpung kennzeichnende Daten gespeichert werden, wobei die Daten einen Zeitstempel und/oder eine Ortsangabe und/oder ID-Informationen der verwendeten Crimpvorrichtung und/oder ID-Informationen der Bedienperson und/oder die vorbestimmte Anzahl n und/oder das vorbestimmte Kabel und die vorbestimmte Kontakthülse und/oder Informationen über die Bewertung von Kraft/Weg-Kurven von fehlerhaften Crimpungen umfassen können.

Weiterhin kann eine Durchführung des Verfahrens VM zumindest von Schritt eins bis Schritt vier zu einer Anzahl N von bereits erfolgten Durchführungen des Verfahrens VM addiert werden, und/oder in Schritt fünf der Toleranzbereich auch unter Berücksichtigung der Anzahl N bestimmt werden, und/oder die vorstehenden weiteren das Referenzmodell und/oder eine Crimpung kennzeichnenden und gespeicherten Daten die Anzahl N umfassen. Mit der Anzahl N ist insbesondere auch neben der Anzahl n vorteilhaft ein weiterer Parameter zur Klassifizierung des Referenzmodells bereitgestellt.

Es ist von Vorteil das vorstehend beschriebene Verfahren V zur Aktualisierung und wünschenswerten individuellen Feinabstimmung und/oder Optimierung des Referenzmodells zu verwenden. Eine Kraft/Weg-Kurve einer vorbestimmten Qualität kann zur Aktualisierung des Referenzmodells verwendet werden und Schritt fünf und/oder sechs des Verfahrens VM durchgeführt werden, wobei eine Durchführung einer Crimpung zu der vorbestimmten Anzahl n und/oder der Anzahl N addiert werden kann. Die Aktualisierung kann dabei automatisiert und/oder auf Veranlassung einer Bedienperson durchgeführt werden. Auf diese Weise sind ein vorteilhaft dynamisches Referenzmodell und/oder dynamische Hüllkurven und/oder ein dynamischer Toleranzbereich bereitgestellt.

Geeigneter Weise werden die vorstehenden Verfahren V und VM mittels einem Softwareprogramm bereitgestellt, das auf der Auswerteelektronik insbesondere der nachfolgend beschriebenen Crimpvorrichtung vorgesehen ist. Besonders vorteilhaft können das Verfahren V und VM mittels lediglich einem Softwareprogramm bereitgestellt sein, wobei die Verfahren V und VM eine Vielzahl von Routinen des Softwareprogramms gemeinsam verwenden. Geeigneter Weise kann dabei ein jeweils für das Verfahren V und/oder VM geeigneter Betriebsmodus des Softwareprogramms von einer Bedienperson ausgewählt werden.

Auf diese Weise ist eine besonders einfache und vorteilhafte Verwendung des Referenzmodells möglich und auch die Möglichkeit geschaffen, das Referenzmodell dynamisch individuell geeignet anzupassen und zu optimieren.

Bei den Verfahren V und VM wird zur Wegmessung besonders vorteilhaft ein Positionstransmitter verwendet, der mit einem Hallsensor ausgestattet ist, und zur Kraftmessung wird geeigneter Weise wenigstens ein Piezosensor verwendet. Die Sensoren sind dabei für eine wünschenswerte Messgenauigkeit vorteilhaft außerdem derart ausgebildet und angeordnet, dass sie einen Weg und eine Kraft der Einrichtung zur Betätigung und/oder Druckbeaufschlagung auf die Crimpeinheit messen.

Hallsensoren und Piezosensoren sind für eine wünschenswerte Messgenauigkeit vergleichsweise kostengünstig erhältlich.

Die Erfindung betrifft außerdem insbesondere eine Crimpvorrichtung zur Überprüfung der Qualität einer Crimpung eines vorbestimmten Kabels mit einer vorbestimmten gedrehten Kontakthülse und mit einer vorbestimmten Crimphöhe unter Verwendung einer Sensorik zur Messung einer Kraft und eines Wegs einer Einrichtung zur Betätigung einer als Indent-Crimpeinheit ausgebildeten Crimpeinheit und einer Auswerteelektronik, wobei während des Crimpens eine Kraft/Weg-Kurve erfasst und auf einem Bildschirm angezeigt wird.

Eine zur Verpressung des Kabels mit einer insbesondere gedrehten Kontakthülse besonders geeignete Crimpeinheit kann vorteilhaft beispielsweise eine Zweidorn-Crimpeinheit und besonders bevorzugt einen Vierdorn-Crimpeinheit sein.

Als Einrichtung zur Betätigung der Crimpeinheit weist die Crimpvorrichtung geeigneter Weise eine pneumatische Druckeinrichtung mit einem Zylinder und einem Kolben auf, die über einen Hebel mit der Crimpeinheit in Wirkverbindung steht. Ein vorstehender Positionstransmitter kann zur Wegmessung auf einfache Weise an dem Zylinder vorgesehen sein, und wenigstens ein vorstehender Piezosensor kann zur Kraftmessung an wenigstens einer Befestigung des Zylinders und/oder dem Hebel vorgesehen sein.

Zur Einstellung einer vorbestimmten Crimphöhe ist eine Einstellmechanik vorgesehen, wonach die Crimpvorrichtung für verschiedene Anwendungen geeignet ist. Darüber hinaus kann die Crimpvorrichtung eine Abisoliereinrichtung aufweisen, die an der Crimpeinheit vorgesehen sein kann.

Die Crimpvorrichtung ist demnach zur Durchführung eines vorstehend beschriebenen Verfahrens V und VM geeignet eingerichtet.

Wie vorstehend gesagt können die Verfahren V und VM mittels einem Softwareprogramm bereitgestellt sein, das auf der Auswerteelektronik der Crimpvorrichtung vorgesehenen sein kann.

Die Auswerteelektronik kann dabei insbesondere zur Auswertung der Kraft- und Wegmessung für einen insbesondere auch automatisierten Abgleich einer Kraft/Weg-Kurve mit einem Referenzmodell und/oder für eine qualitative Fehleranalyse mit insbesondere auch Angaben über deren Wahrscheinlichkeit und zur Ansteuerung des Bildschirms eingerichtet sein. Die Auswerteelektronik kann darüber hinaus Schnittstellen zu kabelgestützten und/oder drahtlosen signal- und/oder datentechnischen Verbindungen aufweisen. Die Crimpvorrichtung kann auf diese Weise vernetzt sein, wonach eine vorbestimmte Fehlermeldung einer Crimpung von einem Verfahren V und VM an eine externe Einrichtung gesendet werden kann. Beispielsweise kann eine derartige vorstehende Fehlermeldung an ein Mobiltelefon eines Servicetechnikers erfolgen, wonach die Möglichkeit einer vorteilhaft zeitnahen Wartung einer Crimpeinheit bereitgestellt ist.

Für eine einfache Bedienung kann der Bildschirm geeigneter Weise ein Touch-Screen Bildschirm sein.

Geeigneter Weise kann ein vorstehend beschriebenes mittels einem Verfahren VM erstelltes Referenzmodell außerdem zur Überwachung der Qualität einer Crimpung mit einem Verfahren V unter Verwendung einer ersten vorstehenden Crimpvorrichtung herangezogen werden, wobei das Referenzmodell unter Verwendung einer zweiten Crimpvorrichtung erstellt wurde.

Das Referenzmodell kann dabei vorteilhaft an die Charakteristika der ersten Crimpvorrichtung mittels einer vorstehend beschriebenen Aktualisierung des Referenzmodells unter Verwendung des Verfahrens V und/oder des Verfahrens VM insbesondere auch dynamisch angepasst und/oder optimiert werden. Auf diese Weise ist mit den Verfahren V und VM die Möglichkeit geschaffen, eine Crimpvorrichtung auf besonders effiziente und kostengünstige Weise optimiert einzurichten. Darüber hinaus kann dadurch eine Einrichtung einer Crimpvorrichtung im laufenden Betrieb der Crimpvorrichtung weitgehend automatisiert optimiert werden.

Vorteilhafte Ausführungen der Erfindung sind in den Unteransprüchen und/oder der nachfolgenden Beschreibung angegeben.

### Ausführungsbeispiele

Ausführungsbeispiele der Erfindung sind in den Zeichnungen dargestellt und werden im Folgenden näher erläutert. Es zeigen:
- Fig. 1A: eine schematische Darstellung einer Crimpvorrichtung nach mit einer Crimpeinheit nach einer Ausführung der Erfindung;
- Fig. 1B: eine vergrößerte detailliertere Darstellung der Crimpeinheit von Fig. 1A;
- Fig. 1C: einen vergrößerten Dorn der Crimpeinheit von Fig. 1A und 1B;
- Fig. 1D: ein Kabel mit einer Kontakthülse, lose und miteinander vercrimpt;
- Fig. 2A: eine Kraft/Weg-Kurve einer Crimpung nach einer Ausführung der Erfindung;
- Fig. 2B: einen Schnitt durch eine bestimmungsgemäß zur Crimpung mit einem Kabel versehene Kontakthülse;
- Fig. 2C - Fig. 2F: jeweils Schliffbilder eines Schnitts durch eine Crimpung der Kontakthülse mit dem Kabel von Fig. 2B in verschiedenen Stadien der Crimpung;
- Fig. 3A: eine weitere vergrößerte Darstellung der Crimpeinheit von Fig. 1A in Ruheposition, zusammen mit einer bestimmungsgemäß zum Vercrimpen angeordneten Kontakthülse und einem Kabel;
- Fig. 3B: die Crimpeinheit von Fig. 3A in einer ersten Position;
- Fig. 3C: die Crimpeinheit von Fig. 3A und 3B in einer weiteren Position;
- Fig. 4A: weitere Kraft/Weg-Kurven einer Crimpung zusammen mit zwei Hüllkurven eines Referenzmodells nach einer Ausführung der Erfindung;
- Fig. 4B: ein Referenzmodell zur Überprüfung der Qualität einer Crimpung nach einer Ausführung der Erfindung; und
- Fig. 5: ein schematisches Flußdiagramm eines Verfahrens zur Erstellung eines Referenzmodells von Fig. 4B.

Die Figuren enthalten teilweise vereinfachte, schematische Darstellungen. Zum Teil werden für gleiche, aber gegebenenfalls nicht identische Elemente identische Bezugszeichen verwendet. Verschiedene Ansichten gleicher Elemente könnten unterschiedlich skaliert sein. Der Einfachheit und Übersichtlichkeit halber sind in den Zeichnungen jeweils nur ein gleiches oder gleichartiges Element mit einem Bezugszeichen versehen.

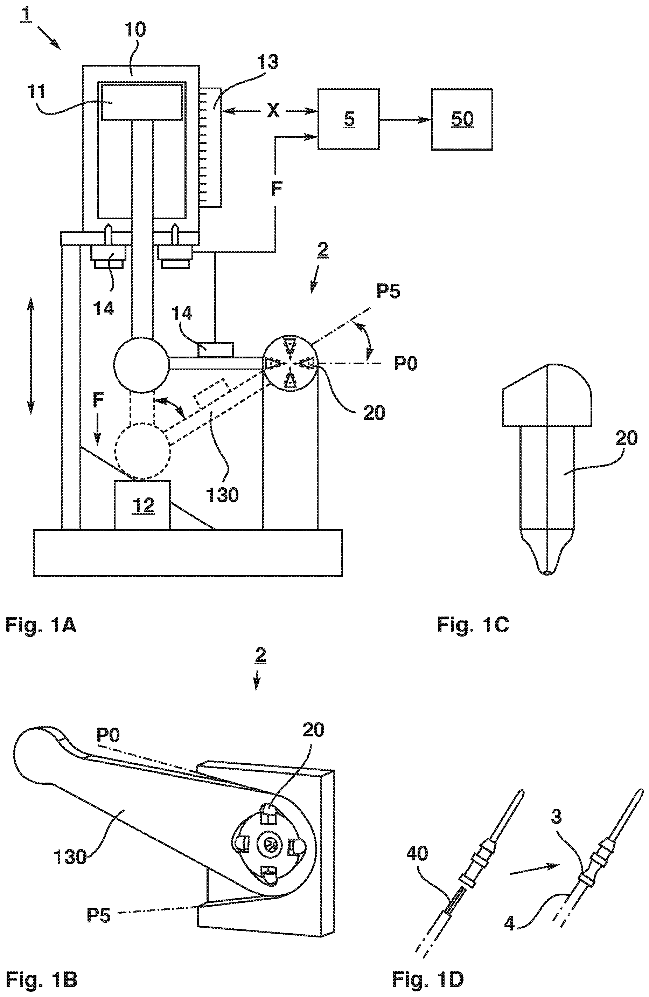

Fig. 1A zeigt eine schematische Darstellung einer Crimpvorrichtung 1 nach einer Ausführung der Erfindung, und Fig. 1D zeigt ein Kabel 4 mit einer Kontakthülse 3, jeweils lose und miteinander vercrimpt. Bei der Kontakthülse 3 handelt es sich um eine gedrehte Kontakthülse 3.

Bei der Crimpvorrichtung 1 handelt es sich um eine Indent-Crimpvorrichtung und insbesondere um ein Vierdorn-Crimpvorrichtung mit einer vier Dorne 20 aufweisenden Crimpeinheit 2, die zur Verpressung einer Litze eines abisolierten einadrigen Kabels 4 mit einer gedrehten Kontakthülse 3 besonders geeignet ist.

Zur Betätigung der Crimpeinheit 2 weist die Crimpvorrichtung 1 eine pneumatische Druckeinrichtung mit einem Zylinder 10 und einem Kolben 11 auf, die über einen Hebel 130 mit der Crimpeinheit 2 in Wirkverbindung steht. Zur Einstellung einer vorbestimmten Crimphöhe ist eine geeignete Einstellmechanik 12 vorgesehen.

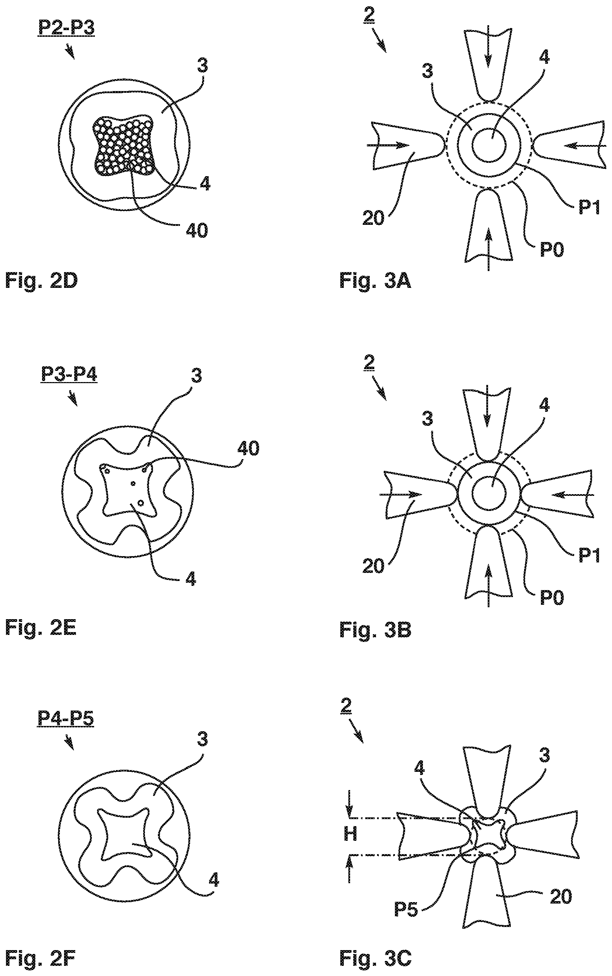

Bei einer Crimpung mittels Verpressung einer insbesondere gedrehten Kontakthülse 3 mit einem Kabel 4 wird die Kontakthülse 3 mit der in ihr befindlichen Litze des Kabels 4 bestimmungsgemäß in die Crimpeinheit 2 eingeführt, und die Crimpeinheit 2 mittels der Druckeinrichtung betätigt und mit Druck beaufschlagt. Mittels einer vertikalen Bewegung und einer vertikal wirkenden Kraft F der Druckeinrichtung wird der mit der Crimpeinheit 2 gekoppelte Hebel 130 verschwenkt. Die Crimpeinheit 2 und der Hebel 130 sind dabei derart ausgebildet und angeordnet, dass sich die Dorne 20 bei einer Schwenkung aus ihrer Ruheposition P0 aufeinander zu bewegen oder in ihre Ruheposition P0 gebracht werden, was nachfolgend unter Bezugnahme auf Fig. 1B beschrieben wird. Dabei liegen die Spitzen der Dorne 20 jeweils auf konzentrischen Kreisen, was nachfolgend unter Bezugnahme auf Fig. 3A, 3B und 3C beschrieben wird.

Die Crimpvorrichtung 1 ist zur Überprüfung der Qualität einer Crimpung eines vorbestimmten Kabels 4 mit einer vorbestimmten Kontakthülse 3 geeignet eingerichtet und weist hierfür einen Wegsensor 13 und wenigstens einen Kraftsensor 14 auf. Der Wegsensor 13 kann geeigneter Weise ein Positionstransmitter mit einem Hallsensor sein und an dem Zylinder 10 der Druckeinrichtung vorgesehen sein. Der Kraftsensor 14 kann geeigneter Weise ein Piezosensor 14 sein und an dem Hebel 130 angeordnet sein und/oder wenigstens ein an einer Befestigung des Zylinders 10 vorgesehener Piezosensor sein. Die Piezosensoren messen dabei jeweils eine Spannung bzw. Dehnung bei der Betätigung des Hebels 130 bzw. die auf den Zylinder 10 wirkende Gegenkraft eines auf den Kolben 11 wirkenden Drucks.

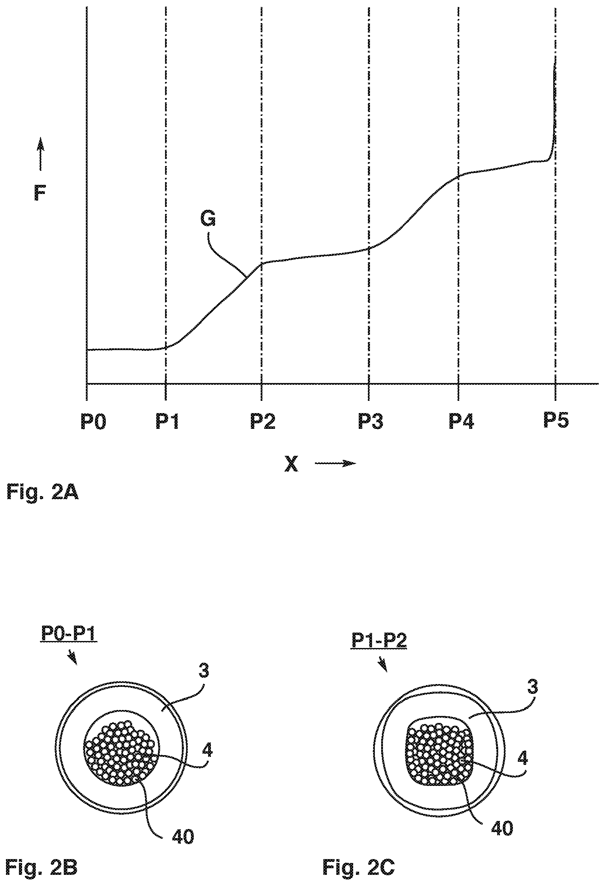

Die Sensorik 13, 14 ist mit einer Auswerteelektronik 5 signal- und/oder datentechnisch verbunden. Die Auswerteelektronik 5 steuert einen Bildschirm 50 und zeigt eine unter Verwendung der Signale der Sensorik 13, 14 erfasste Kraft/Weg-Kurve G einer Crimpung zusammen mit weiteren Informationen auf dem Bildschirm 50 an. Ein Beispiel einer Kraft/Weg-Kurve G wird nachfolgend unter Bezugnahme von Fig. 2A beschrieben.

Fig. 1B zeigt eine vergrößerte, detailliertere Darstellung der Crimpeinheit 2 und Fig. 1C zeigt einen vergrößerten Dorn 20 der Crimpeinheit von Fig. 1A und 1B. Der Übersichtlichkeit halber ist der Kraftsensor 14 auf dem Hebel 130 in Fig. 1B nicht dargestellt.

Die Crimpeinheit 2 weist eine zylindrische Führung auf, in der vier Dorne 20 radial beweglich gelagert sind. Die Spitzen der Dorne 10 sind aufeinander zu ausgerichtet. Der Hebel 130 ist auf der zylindrischen Führung axial schwenkbar bzw. drehbar gelagert und weist eine Innenkontur auf, die mit aus der zylindrischen Führung herausragenden Köpfen der Dorne 20 zusammenwirkt. Bei einer Verschwenkung des Hebels 130 werden die Spitzen der Dorne 20 in Richtung der Achse der zylindrischen Führung bzw. der Schwenkachse des Hebels 130 aufeinander zu bzw. voneinander wegbewegt. Bei einer Crimpung wird eine mit einem Kabel 4 versehene Kontakthülse 3 auf diese Weise mittels Betätigung des Hebels 130 an der Achse der zylindrischen Führung mit dem Kabel 4 verpresst.

Die Crimpeinheit 2 mit ihren Dornen 20 wird außerdem nachfolgend unter Bezugnahme auf Fig. 3A, 3B und 3C beschrieben.

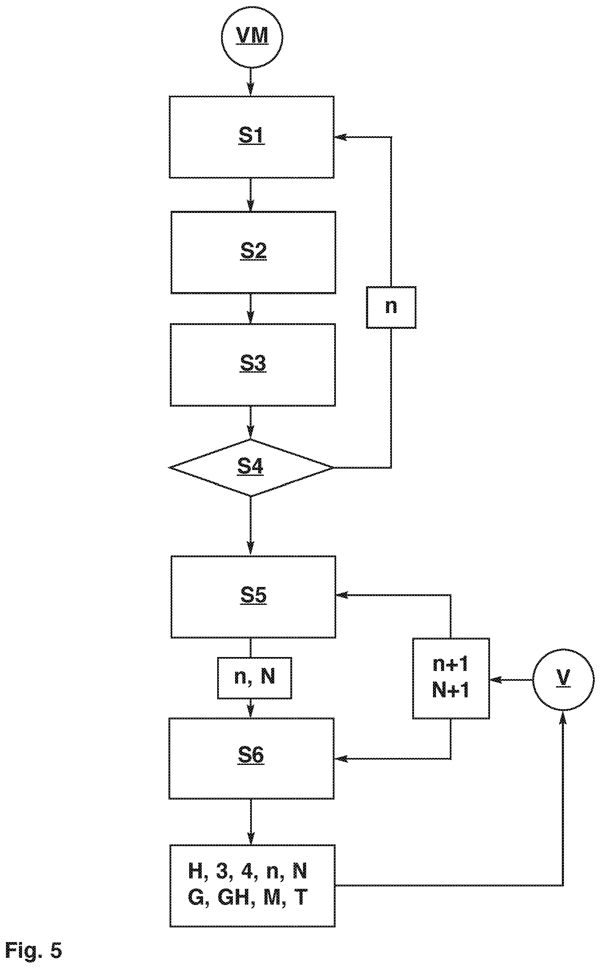

Eine Crimpvorrichtung 1 mit den vorstehend beschriebenen Merkmalen ist zur Durchführung eines eingangs und nachfolgend unter Bezugnahme auf insbesondere auch Fig. 5 beschriebenen Verfahrens V und VM geeignet.

Fig. 2A zeigt eine Kraft/Weg-Kurve G einer mittels einer Crimpvorrichtung 1 von Fig. 1A durchgeführten Crimpung einer Kontakthülse 3 mit einem Kabel 4 von Fig. 1D nach einer Ausführung der Erfindung.

Die Dorne 20 der Crimpeinheit 2 werden bei der Crimpung von ihrer Ruheposition P0 in weitere Positionen P1 bis P5 gebracht, wobei die Spitzen der Dorne 20 jeweils auf konzentrischen Kreisen angeordnet sind. Dabei wird von der Sensorik 13, 14 ein Weg X und eine Kraft F gemessen, die von der Kraft/Weg-Kurve G dargestellt sind. Den Positionen P1 bis P5 entsprechen jeweils Positionen P1 bis P5 der Dorne 20 und korrespondieren dabei jeweils mit einem gemessenen Weg X des Sensors 13.

Eine vergrößerte Darstellung der Crimpeinheit 2 von Fig. 1A in der Ruheposition P0, zusammen mit einer bestimmungsgemäß zum Vercrimpen in der Crimpeinheit 2 angeordneten Kontakthülse 3 und einem Kabel 4 ist in Fig. 3A dargestellt. Die Spitzen der Dorne 20 der Crimpeinheit 2 sind dabei konzentrisch mit der Kontakthülse 3 angeordnet.

Eine Verlagerung der Dorne 20 von der Position P0 zu der Position P1 erfolgt dabei unter Einsatz einer konstanten Kraft F. Dementsprechend ist auch der Verlauf der Kraft/Weg-Kurve G in einem ersten Bereich P0-P1 zwischen der Position P0 und der Position P1 der Dorne 20 konstant. In der Position P1 berühren die Dorne 20 der Crimpeinheit 2 die Oberfläche der Kontakthülse 3. Diese Position P1 der Dorne 20 ist schematisch in Fig. 3B dargestellt.

Fig. 2B zeigt eine gegenüber Fig. 3A vergrößerte und detailliertere Darstellung eines Schnitts durch eine bestimmungsgemäß zur Crimpung mit einem Kabel 4 versehene Kontakthülse 3. Der Innenraum der Kontakthülse 30 weist neben Einzeldrähten 40 der Litze des Kabels 4 einen von den Einzeldrähten 40 der Litze nicht beanspruchten Hohlraum auf. Die Kontakthülse 3 ist unversehrt und ihr Zustand entspricht der Kontakthülse 3 von Fig. 3A und 3B in dem Bereich P0-P1 der Crimpung mit der Kraft/Weg-Kurve G.

In dem weiteren Verlauf der Kraft/Weg-Kurve G nimmt die Kraft F von der Position P1 zu einer Position P2 der Dorne 20 etwa linear zu, wobei in diesem Bereich P1-P2 eine elastische Verformung der Kontakthülse 3 stattfindet. Dabei sind die Einzeldrähte 40 der Litze des Kabels 4 in der Kontakthülse 3 zusammen mit einem vergleichsweise kleineren Hohlraum angeordnet, was in einem Schliffbild der Kontakthülse 3 für den Bereich P1-P2 von Fig. 2C dargestellt ist.

Daran anschließend erfolgt von der Position P2 zu einer Position P3 der Dorne 20 ein vergleichsweise flacher Verlauf der Kraft/Weg-Kurve G, wobei in dem Bereich P2-P3 eine erste irreversible Deformation der Kontakthülse 3 erfolgt. Der für die Litze in der Kontakthülse 3 zur Verfügung stehende Raum ist in diesem Bereich P2-P3 beträchtlich verengt, so dass neben den Einzeldrähten 40 der Litze ein vergleichsweise kleiner Hohlraum vorhanden ist. Dieser Zustand der Kontakthülse 3 und der Litze ist in einem Schliffbild der Kontakthülse für den Bereich P2-P3 von Fig. 2D dargestellt.

In ihrem weiteren Verlauf nimmt die Kraft/Weg-Kurve G von der Position P3 zu einer Position P4 der Dorne 20 einen wieder steileren Verlauf, wobei in dem Bereich P3-P4 neben einer elastischen Verformung der Litze eine weitere irreversible Deformation der Kontakthülse 3 erfolgt und die Litze den in der Kontakthülse 3 zur Verfügung stehenden Raum fast vollständig beanspruchen. Dieser Zustand der Kontakthülse 3 und der Litze ist in einem Schliffbild der Kontakthülse 3 für den Bereich P3-P4 von Fig. 2E dargestellt, in dem nur wenige Einzeldrähte 40 der Litze erkennbar sind und kaum Hohlraum vorhanden ist.

Daran anschließend erfolgt von der Position P4 zu einer Position P5 der Dorne 20 erneut ein vergleichsweise flacher Verlauf der Kraft/Weg- Kurve G, wobei in dem Bereich P4-P5 neben einer weiteren irreversiblen Deformation der Kontakthülse 3 auch eine nicht-elastische Deformation der Litze erfolgt. In diesem Bereich P4-P5 füllt die Litze den in der Kontakthülse 3 zur Verfügung stehenden Raum vollständig aus. Dieser Zustand der Kontakthülse 3 und der Litze ist in einem Schliffbild der Kontakthülse 3 für den Bereich P4-P5 von Fig. 2F dargestellt, in dem keine Einzeldrähte 40 der Litze erkennbar sind und neben der Litze kein Hohlraum vorhanden ist.

Fig. 2F zeigt dabei ein Schliffbild einer Crimpung mit einer wünschenswerten vorbestimmten Qualität, in dem keine Einzeldrähte 40 oder Risse in der Kontakthülse 3 aufgrund z.B. unerwünschter Materialmängel erkennbar sind.

Fig. 3C zeigt hierzu die Dorne 20 der Crimpeinheit 2 an der mit der Position P5 der Kraft/Weg-Kurve G korrespondierenden Position P5 der Dorne 20, wobei die Spitzen der Dorne 20 auf einem Kreis mit einem Durchmesser H angeordnet sind, der der eingestellten Crimphöhe H entspricht.

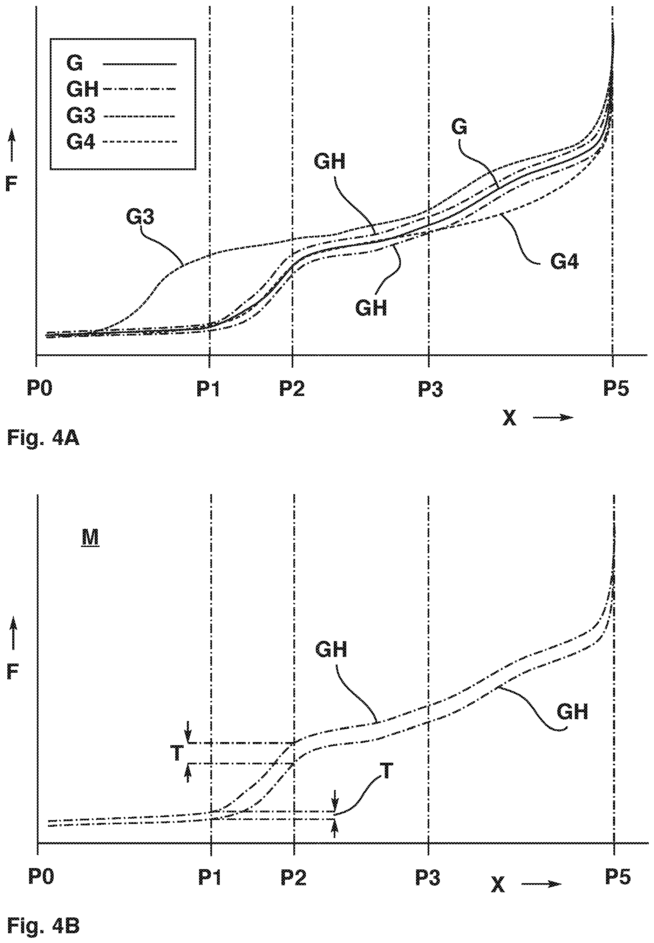

Die Kraft F der Kraft/Weg-Kurve G von Fig. 2A steigt an dieser Position P5 sprunghaft an und erreicht ihr Maximum und fällt bei Verwendung eines Dehnungssensors dann ab. Eine vorstehende Kraft/Weg-Kurve G ist geeignet zur gemeinsamen Anzeige mit einem nachfolgend unter Bezugnahme auf Fig. 4A und 4B beschriebenen Referenzmodell M in dem eingangs beschriebenen erfindungsgemäßen Verfahren V und zur Prüfung, ob die Kraft/Weg-Kurve G innerhalb eines Toleranzbereichs T des Referenzmodells M liegt, der von zwei Hüllkurven GH begrenzt wird.

Fig. 4A zeigt weitere Kraft/Weg-Kurven G, G3 und G4 einer Crimpung zusammen mit zwei Hüllkurven GH eines Referenzmodells M nach einer Ausführung der Erfindung, und Fig. 4B zeigt das Referenzmodell M zur Überprüfung der Qualität einer Crimpung von Fig. 4A ohne die Kraft/Weg-Kurven G, G3 und G4.

Die beiden Hüllkurven GH sind in Fig. 4A jeweils mit strichpunktierten Linien dargestellt und begrenzen einen Toleranzbereich T einer Kurvenschar von ein vorbestimmtes Streuverhalten aufweisenden Referenzkurven G. Der Toleranzbereich T variiert dabei über den Verlauf der Hüllkurven GH, und ist beispielsweise und an der Position P1, an der die Dorne 20 einer Crimpeinheit 2 eine Kontakthülse 3 gerade berühren, schmaler als an der Position P2, an der eine irreversible Deformation der Kontakthülse 3 auftritt.

Die Kraft/Weg-Kurve G von Fig. 4A ist mit einer durchgezogenen Linie dargestellt und liegt in ihrem gesamten Verlauf von der Position P0 bis zu der Position P5 der Dorne 20 zwischen den Hüllkurven GH und entspricht einer Crimpung einer Kontakthülse 3 mit einem Kabel 4 mit einer vorbestimmten wünschenswerten Qualität.

Die Kraft/Weg-Kurve G3 von Fig. 4A ist mit einer gestrichelten Linie dargestellt und verläuft nahezu vollständig oberhalb der beiden Hüllkurven GH. Die Kraft/Weg-Kurve G3 korrespondiert mit einer Crimpung einer zu großen Kontakthülse 3, die von den Dornen 20 einer Crimpeinheit 2 weit vor der für eine Berührung der Kontakthülse 3 vorgesehenen Position P1 berührt und elastisch verformt wird. Demzufolge liegt der Kraftverlauf F der Kraft/Weg-Kurve G3 bis zu der Position P2 weit oberhalb des Toleranzbereichs T.

Bei einer Crimpung mit einer Kraft/Weg-Kurve G3 kann auf einem Bildschirm 50 einer Crimpvorrichtung 1 neben den Kurven G3 und GH auch die Information angezeigt werden, dass die Crimpung eine unerwünschte Qualität aufgrund einer fehlerhaft großen Kontakthülse 3 aufweist. Darüber hinaus kann aus dem Verlauf der Kraft/Weg-Kurve G3 mit einem eingangs beschriebenen erfindungsgemäßen Verfahren V eine Wahrscheinlichkeit eines Vorliegens eines vorstehend genannten Fehlers berechnet und ebenfalls auf dem Bildschirm 50 angezeigt werden.

Die Kraft/Weg-Kurve G4 von Fig. 4A ist ebenfalls mit einer gestrichelten Linie dargestellt und verläuft zunächst innerhalb des von den beiden Hüllkurven GH vorgegebenen Toleranzbereichs T. Anders als die Kraft/Weg-Kurve G3 korrespondiert die Kraft/Weg-Kurve G4 mit einer Crimpung einer korrekten Kontakthülse 3 und eines zu kleinen Kabels 4 mit einer zu kleinen Litze und/oder mit zu wenig Einzeldrähten 40. Aufgrund der zu kleinen Litze oder zu wenigen Einzeldrähten 40 liegt der Kraftverlauf F ab etwa der vorstehend unter Bezugnahme auf Fig. 2A beschriebenen Position P3 der Dorne 20 unterhalb eines korrekten Kraftverlaufs F und außerhalb des von den beiden Hüllkurven GH vorgegebenen Toleranzbereichs T.

Bei einer Crimpung mit einer Kraft/Weg-Kurve G4 kann auf einem Bildschirm 50 einer Crimpvorrichtung 1 neben den Kurven G4 und GH auch die Information angezeigt werden, dass die Crimpung eine unerwünschte Qualität aufgrund eines fehlerhaft kleinen Kabels 4 hat, dessen Litze zu wenig Einzeldrähte 40 aufweist. Darüber hinaus kann aus dem Verlauf der Kraft/Weg-Kurve G4 mit einem eingangs beschriebenen erfindungsgemäßen Verfahren V eine Wahrscheinlichkeit eines Vorliegens eines vorstehend genannten Fehlers berechnet und ebenfalls auf dem Bildschirm 50 angezeigt werden.

Wie vorstehend unter Bezugnahme auf Fig. 2A gesagt ist ein Referenzmodell M von Fig. 4B geeignet zur Verwendung in dem eingangs beschriebenen Verfahren V zur gemeinsamen Darstellung und/oder zum automatisierten Abgleich mit einer Kraft/Weg-Kurve einer zu prüfenden Crimpung.

Fig. 5 zeigt ein schematisches Flußdiagramm eines Verfahrens VM zur Erstellung eines Referenzmodells M von Fig. 4B einer Crimpung eines vorbestimmten Kabels 4 mit einer vorbestimmten Kontakthülse 3 und mit einer vorbestimmten Crimphöhe H unter Verwendung einer Crimpvorrichtung 1 von Fig. 1A mit der vorstehend beschriebenen Sensorik 13, 14 und der Auswerteelektronik 5, wobei während des Crimpens eine Kraft/Weg-Kurve G, G3, G4 erfasst und auf einem Bildschirm 50 angezeigt wird. Das Verfahren VM weist insbesondere die nachfolgenden Schritte S1 bis S6 auf.

In einem ersten Schritt S1 wird eine Crimpung durchgeführt und eine Kraft/Weg-Kurve G, G3, G4 der Crimpung erfasst und auf dem Bildschirm 50 angezeigt.

In einem zweiten Schritt S2 wird eine Bewertung der Qualität der Crimpung von einer Bedienperson mittels Augenschein und/oder unter Verwendung von geeigneten Prüfmitteln durchgeführt. Beispielsweise kann die Bewertung optisch insbesondere mittels Begutachtung eines Schliffbilds gemäß z.B. Fig. 2F eines Schnitts durch die Crimpung durchgeführt werden.

In einem dritten Schritt S3 wird eine Kraft/Weg-Kurve G einer positiv bewerteten Crimpung mit vorbestimmter Qualität für eine Kurvenschar von Kraft/Weg-Kurven G mit einer vorbestimmten Anzahl n von Kraft/Weg-Kurven G verwendet.

In einem vierten Schritt S4 wird der vorstehende erste, zweite und dritte Schritt mit einem weiteren Kabel 4 und mit einer weiteren Kontakthülse 3 wiederholt, bis die vorbestimmte Anzahl n erreicht ist.

In einem fünften Schritt S5 wird ein Toleranzbereich T mit einer vorbestimmten Toleranz und/oder unter Berücksichtigung der vorbestimmten Qualität und/oder des vorbestimmten Kabels 4 und/oder der vorbestimmten Kontakthülse 3 und/oder einer vorbestimmten Crimphöhe H und/oder der vorbestimmten Anzahl n mittels Festlegung einer ersten und zweiten Hüllkurve GH bestimmt, die die Kurvenschar der Kraft/Weg-Kurven G begrenzen.

In einem sechsten Schritt S6 wird die erste und zweite Hüllkurve GH und/oder der Toleranzbereichs T und/oder die Kurvenschar von n Kraft/Weg-Kurven G als Referenzmodell M gemäß Fig. 4B zur Verwendung in dem eingangs beschriebenen erfindungsgemäßen Verfahren V aufgezeichnet.

In dem sechsten Schritt S6 können zusammen mit dem Referenzmodell M weitere das Referenzmodell M und/oder eine Crimpung kennzeichnende Daten gespeichert werden, wobei die Daten einen Zeitstempel und/oder eine Ortsangabe und/oder ID-Informationen der verwendeten Crimpvorrichtung und/oder ID-Informationen der Bedienperson und/oder die vorbestimmte Anzahl n und/oder das vorbestimmte Kabel 4 und/oder die vorbestimmte Kontakthülse 3 und/oder die vorbestimmte Crimphöhe H und/oder Informationen über die Bewertung von Kraft/Weg-Kurven G3, G4 von fehlerhaften Crimpungen umfassen können.

Weiterhin kann eine Durchführung des Verfahrens VM zumindest von Schritt S1 bis Schritt S4 zu einer Anzahl N von bereits erfolgten Durchführungen des Verfahrens VM addiert werden. In Schritt S5 kann außerdem der Toleranzbereich T insbesondere unter Berücksichtigung der Anzahl N und/oder den weiteren das Referenzmodell M und/oder eine Crimpung kennzeichnenden und aufgezeichneten Daten bestimmt werden.

Das vorstehend unter Bezugnahme auf Fig. 5 beschriebene Verfahren VM kann mittels einem Softwareprogramm bereitgestellt sein, das auf der Auswerteelektronik vorgesehenen sein kann, und das derart ausgebildet ist, dass es auch für das eingangs beschriebene Verfahren V verwendet werden kann. Dabei können das Verfahren V und VM eine Vielzahl von Routinen des Softwareprogramms gemeinsam verwenden. Geeigneter Weise kann dabei ein jeweils für das Verfahren V und/oder VM geeigneter Betriebsmodus des Softwareprogramms von einer Bedienperson ausgewählt werden.

Ein eingangs beschriebenes Verfahren V kann besonders vorteilhaft zur Aktualisierung und wünschenswerten individuellen Feinabstimmung und/oder Optimierung eines Referenzmodells M verwendet werden. Eine Kraft/Weg-Kurve G einer Crimpung mit einer vorbestimmten wünschenswerten Qualität kann dabei zur Aktualisierung des Referenzmodells M verwendet werden und Schritt S5 und/oder S6 des Verfahrens VM durchgeführt werden und/oder die Durchführung einer Crimpung mit dem Verfahren V kann zu der vorbestimmten Anzahl n und/oder der Anzahl N addiert werden. Die Aktualisierung kann dabei automatisiert und/oder auf Veranlassung einer Bedienperson durchgeführt werden, wobei beispielsweise von einem für das Verfahren V geeigneten Betriebsmodus eines Softwareprogramms in einen für das Verfahren VM geeigneten Betriebsmodus gewechselt werden kann. Auf diese Weise können ein vorteilhaft dynamisches Referenzmodell M und/oder dynamische Hüllkurven GH bereitgestellt werden.

Auch wenn in den Figuren verschiedene Aspekte oder Merkmale der Erfindung jeweils in Kombination gezeigt sind, ist für den Fachmann - soweit nicht anders angegeben - ersichtlich, dass die dargestellten und diskutierten Kombinationen nicht die einzig möglichen sind. Insbesondere können einander entsprechende Einheiten oder Merkmalskomplexe aus unterschiedlichen Ausführungsbeispielen miteinander ausgetauscht werden.

### Bezugszeichenliste

- 1: Crimpvorrichtung
- 10: Zylinder
- 11: Kolben
- 12: Einstellmechanik
- 13: Wegsensor
- 130: Hebel
- 14: Kraftsensor
- 2: Crimpeinheit
- 20: Dorn
- 3: Kontakthülse
- 4: Kabel
- 40: Einzeldraht
- 5: Auswerteelektronik
- 50: Bildschirm

- F: Kraft
- X: Weg
- H: Crimphöhe
- T: Toleranzbereich
- V, VM: Verfahren
- M: Referenzmodell
- N, n: Anzahl
- G, GH, G3, G4: Kurve
- P0, P1, P2, P3, P4, P5, P6: Position
- S1, S2, S3, S4, S5, S6: Schritt

## Patentansprüche

1. Verfahren (VM) zur Erstellung eines einen Toleranzbereich (T) aufweisenden Referenzmodells (M) zur Überprüfung der Qualität einer Crimpung eines vorbestimmten Kabels (4) mit einer vorbestimmten gedrehten Kontakthülse (3) und mit einer vorbestimmten Crimphöhe (H) mit einer Indent-Crimpeinheit (2) einer Crimpvorrichtung (1), unter Verwendung einer Sensorik (13, 14) zur Messung einer Kraft (F) und eines Wegs (X) einer Einrichtung zur Betätigung und/oder Druckbeaufschlagung der als Indent-Crimpeinheit (2) ausgebildeten Crimpeinheit (2) und einer Auswerteelektronik (5), wobei
eine vorbestimmte Anzahl von Referenzcrimpungen durchgeführt wird, deren Ergebnisse auf Qualität der Crimpung kontrolliert und aufgezeichnet wird; und wobei
während des Crimpens eine Kraft/Weg-Kurve (G, G3, G4) erfasst und auf einem Bildschirm (50) angezeigt wird, mit den Schritten:
- Durchführung einer Crimpung eines Kabels (4) mit einer Kontakthülse (3) und Erfassung und Anzeige einer Kraft/Weg-Kurve (G, G3, G4) der Crimpung auf dem Bildschirm (50) in einem ersten Schritt (S1);
- Bewertung der Qualität der Crimpung von einer Bedienperson mittels Augenschein und/oder unter Verwendung von geeigneten Prüfmitteln in einem zweiten Schritt (S2);
- Verwendung einer Kraft/Weg-Kurve (G) einer positiv bewerteten Crimpung mit vorbestimmter Qualität für eine Kurvenschar von Kraft/Weg-Kurven (G) mit einer vorbestimmten Anzahl (n) von Kraft/Weg-Kurven (G) in einem dritten Schritt (S3);
- Wiederholung des ersten (S1), zweiten (S2) und dritten (S3) Schritts mit einem weiteren Kabel (4) mit einer weiteren Kontakthülse (3), bis die vorbestimmte Anzahl (n) erreicht ist, in einem vierten Schritt (S4);
- Bestimmung des Toleranzbereichs (T) mit einer vorbestimmten Toleranz unter Berücksichtigung der vorbestimmten Qualität und/oder der vorbestimmten Crimphöhe (H) und/oder des vorbestimmten Kabels (4) und/oder der vorbestimmten Kontakthülse (3) und/oder der vorbestimmten Anzahl (n) mittels Festlegung einer ersten und zweiten Hüllkurve (GH), die die Kurvenschar der Kraft/Weg-Kurven (G) und den Toleranzbereich (T) begrenzen in einem fünften Schritt (S5);
- Wobei der Toleranzbereich (T) variabel in Abhängigkeit des Weges (X) und/oder der Kraft (F) festgelegt ist, so dass eine besonders genaue Beurteilung einer Crimpung und der sie kennzeichnenden Kraft/Weg-Kurve (G) möglich ist;
- Aufzeichnung der ersten und zweiten Hüllkurve (GH) und/oder des Toleranzbereichs (T) und/oder der Kurvenschar von (n) Kraft/Weg-Kurven (G) als Referenzmodell (M) zur Verwendung in einem Verfahren (V) zur Überprüfung der Qualität einer Crimpung, bei dem eine Kraft/Weg-Kurve (G, G3, G4) einer Crimpung auf einem Bildschirm (50) angezeigt wird, und insbesondere zur gemeinsamen Anzeige des Referenzmodells (M) und der Kraft/Weg-Kurve (G, G3, G4) auf dem Bildschirm (50) in einem sechsten Schritt (S6).

2. Verfahren (VM) nach Anspruch 1, wobei
in dem sechsten Schritt (S6) weitere das Referenzmodell (M) und/oder eine Crimpung kennzeichnende Daten gespeichert werden, wobei die Daten einen Zeitstempel und/oder eine Ortsangabe und/oder ID-Informationen der verwendeten Crimpvorrichtung und/oder ID-Informationen der Bedienperson und/oder die vorbestimmte Anzahl (n) und/oder das vorbestimmte Kabel (4) und/oder die vorbestimmte Kontakthülse (3) und/oder Informationen über die Bewertung von Kraft/Weg-Kurven (G3, G4) von fehlerhaften Crimpungen umfassen.

3. Verfahren (VM) nach Anspruch 1 oder 2, wobei
eine Durchführung des Verfahrens (VM) zumindest von Schritt (S1) bis Schritt (S4) zu einer Anzahl (N) von bereits erfolgten Durchführungen des Verfahrens (VM) addiert wird, und/oder in Schritt (S5) der Toleranzbereich (T) unter Berücksichtigung der Anzahl (N) bestimmt wird, und/oder
die weiteren das Referenzmodell (M) und/oder eine Crimpung kennzeichnenden Daten die Anzahl (N) umfassen.

4. Verfahren (V) zur Überprüfung der Qualität einer Crimpung eines vorbestimmten Kabels (4) mit einer vorbestimmten gedrehten Kontakthülse (3) und mit einer vorbestimmten Crimphöhe (H) mit einer Indent-Crimpeinheit (2) einer Crimpvorrichtung (1), unter Verwendung eines einen Toleranzbereich (T) aufweisenden gespeicherten Referenzmodells (M) zur Überprüfung der Qualität einer Crimpung, und unter Verwendung einer Sensorik (13, 14) zur Messung einer Kraft (F) und eines Wegs (X) einer Einrichtung zur Betätigung und/oder Druckbeaufschlagung der als Indent-Crimpeinheit (2) ausgebildeten Crimpeinheit (2) und einer Auswerteelektronik (5)
wobei
als Referenzmodells (M) ein mit dem Verfahren (VM) nach einem der Ansprüche 1 bis 3 erstelltes Referenzmodell (M) verwendet wird, und wobei
während des Crimpens eine Kraft/Weg-Kurve (G, G3, G4) erfasst und auf einem Bildschirm (50) angezeigt wird, mit den Schritten:
- auf dem Bildschirm (50) wird zusammen mit der erfassten Kraft/Weg-Kurve (G, G3, G4) das gespeicherte Referenzmodell (M) angezeigt, das eine erste und zweite Hüllkurve (GH) aufweist, die den Toleranzbereich (T) begrenzen;
- ein Abgleich der Kraft/Weg-Kurve (G, G3, G4) mit dem Referenzmodell (M) wird durchgeführt, wobei ermittelt wird, ob die Kraft/Weg-Kurve (G, G3, G4) in dem Toleranzbereich (T) liegt;
- aus dem Abgleich wird eine Aussage über die Qualität der Crimpung getroffen, wobei
die Qualität der Crimpung einer vorbestimmten wünschenswerten Qualität entspricht, wenn die Kraft/Weg-Kurve (G) in dem Toleranzbereich (T) liegt.

5. Verfahren (V) nach Anspruch 4, wobei die Qualität der Crimpung verneint wird, wenn die Kraft/Weg-Kurve (G3, G4) zumindest teilweise außerhalb des Toleranzbereichs (T) liegt.

6. Verfahren (V) nach Anspruch 5, wobei aus dem Abgleich der Kraft/Weg-Kurve (G3, G4) mit dem Referenzmodell (M) eine qualitative Fehleranalyse der Crimpung abgeleitet wird.

7. Verfahren (V) nach einem der Ansprüche 4 bis 6, wobei die Kraft/Weg-Kurven (G, G3, G4) zur Aktualisierung des Referenzmodells (M) verwendet werden, wobei Schritt fünf (S5) und/oder sechs (S6) des Verfahrens (VM) nach einem der Ansprüche 1 bis 3 durchgeführt wird, wobei eine Durchführung einer Crimpung zu der vorbestimmten Anzahl (n) und/oder der Anzahl (N) des Verfahrens (VM) nach einem der Ansprüche 1 bis 3 addiert wird, und wobei
die Aktualisierung automatisiert und/oder auf Veranlassung einer Bedienperson durchgeführt wird.

8. Verfahren (V, VM) nach einem der Ansprüche 1 bis 7, wobei der Toleranzbereich (T) variabel in Abhängigkeit des Wegs (X) und/oder der Kraft (F) ist.

9. Verfahren (V, VM) nach einem der Ansprüche 1 bis 8 unter Verwendung wenigstens eines Hallsensors (13) zur Wegmessung (X) und/oder wenigstens eines Piezosensors (14) zur Kraftmessung (F).

10. Verfahren (V, VM) nach einem der Ansprüche 1 bis 9, wobei die erste und zweite Hüllkurve (GH) und der Toleranzbereich (T) und die Kurvenschar von (n) Kraft/Weg-Kurven (G) und die Kraft/Weg-Kurve (G, G3, G4) jeweils von einer Ruheposition (P0) der Crimpeinheit (2) bis zu einer Position (P5) auf dem Bildschirm (50) angezeigt werden, die mit der eingestellten Crimphöhe (H) korrespondiert.

11. Crimpvorrichtung (1) zur Überprüfung der Qualität einer Crimpung eines vorbestimmten Kabels (4) mit einer gedrehten Kontakthülse (3) unter Verwendung einer Sensorik (14) zur Messung einer Kraft (F) einer Einrichtung zur Betätigung und/oder Druckbeaufschlagung einer als Indent-Crimpeinheit (2) ausgebildeten Crimpeinheit (2), die zur Verpressung des Kabels (4) mit der Kontakthülse (3) geeignet ist, und mit einer Auswerteelektronik (5), wobei
die Crimpvorrichtung (1) eine Sensorik (13, 14) zur Messung einer Kraft (F) und eines Wegs (X) der Einrichtung zur Betätigung und/oder Druckbeaufschlagung der Crimpeinheit (2) und einen Bildschirm (50) aufweist, so dass während des Crimpens eine Kraft/Weg-Kurve (G, G3, G4) erfasst und auf einem Bildschirm (50) angezeigt wird, mit den Merkmalen:
die Einrichtung zur Betätigung der Crimpeinheit (2) weist eine pneumatische Druckeinrichtung mit einem Zylinder (10) und einem Kolben (11) auf, die über einen Hebel (130) mit der Crimpeinheit (2) in Wirkverbindung steht;
zur Einstellung einer vorbestimmten Crimphöhe (H) ist eine Einstellmechanik (12) vorgesehen;
die Crimpvorrichtung (1) ist zur Durchführung eines Verfahrens (V, VM) nach einem der Ansprüche 1 bis 10 mittels einem auf der Auswerteelektronik (5) vorgesehenen Softwareprogramm geeignet eingerichtet.

12. Crimpvorrichtung (1) nach Anspruch 11 mit wenigstens einem Hallsensor (13) zur Wegmessung (X) und/oder wenigstens einem Piezosensor (14) zur Kraftmessung (F).

13. Crimpvorrichtung (1) nach Anspruch 11 oder 12, wobei die Crimpeinheit (2) eine Zweidorn-Crimpeinheit und besonders bevorzugt einen Vierdorn-Crimpeinheit ist.

14. Verwendung eines Referenzmodells (M) nach einem der Ansprüche 1 bis 3 zur Überwachung der Qualität einer Crimpung mit einem Verfahren (V) nach einem der Ansprüche 4 bis 10 unter Verwendung einer ersten Crimpvorrichtung (1) nach einem der Ansprüche 11 bis 13, wobei das Referenzmodell (M) unter Verwendung einer zweiten Crimpvorrichtung (1) nach einem der Ansprüche 11 bis 13 erstellt wurde.

15. Verwendung nach Anspruch 14, wobei
das Referenzmodell (M) an die Charakteristika der ersten Crimpvorrichtung (1) mittels Aktualisierung des Referenzmodells (M) gemäß dem Verfahren (V) nach einem der Ansprüche 4 bis 10 und/oder gemäß dem Verfahren (VM) nach einem der Ansprüche 1 bis 3 angepasst wird, und wobei
zur Durchführung des Verfahrens (V) und des Verfahrens (VM) Routinen des auf der Auswerteelektronik (5) bereitgestellten Softwareprogramms verwendet werden.

## Claims

1. A method (VM) for creating a reference model (M) having a tolerance range (T) for checking the quality of a crimp of a predetermined cable (4) with a predetermined turned contact sleeve (3) and with a predetermined crimp height (H) with an indent crimp unit (2) of a crimping device (1), using a sensor system (13, 14) for measuring a force (F) and a displacement (X) of a device for actuating and/or applying pressure to the crimp unit (2) configured as an indent crimp unit (2) and an evaluation electronics unit (5), wherein a predetermined number of reference crimps is carried out, the results of which are checked for quality of the crimp and recorded; and wherein during crimping a force/displacement curve (G, G3, G4) is captured and displayed on a screen (50), comprising the steps:
- carrying out a crimp of a cable (4) with a contact sleeve (3) and capturing and displaying a force/displacement curve (G, G3, G4) of the crimp on the screen (50) in a first step (S1);
- evaluating the quality of the crimp by an operator by means of visual inspection and/or using suitable testing means in a second step (S2);
- using a force/displacement curve (G) of a positively evaluated crimp with predetermined quality for a family of curves of force/displacement curves (G) with a
predetermined number (n) of force/displacement curves (G) in a third step (S3);
- repeating the first (S1), second (S2) and third (S3) step with a further cable (4) with a further contact sleeve (3), until the predetermined number (n) is reached, in a fourth step (S4);
- determining the tolerance range (T) with a predetermined tolerance taking into account the predetermined quality and/or the predetermined crimp height (H) and/or the predetermined cable (4) and/or the predetermined contact sleeve (3) and/or the predetermined number (n) by means of defining a first and second envelope curve (GH), which delimit the family of curves of force/displacement curves (G) and the tolerance range (T) in a fifth step (S5);
- wherein the tolerance range (T) is defined variably as a function of the displacement (X) and/or the force (F), so that a particularly accurate assessment of a crimp and the force/displacement curve (G) characterising it is possible;
- recording the first and second envelope curve (GH) and/or the tolerance range (T) and/or the family of curves of (n) force/displacement curves (G) as a reference model (M) for use in a method (V) for checking the quality of a crimp, in which a force/displacement curve (G, G3, G4) of a crimp is displayed on a screen (50), and in particular for jointly displaying the reference model (M) and the force/displacement curve (G, G3, G4) on the screen (50) in a sixth step (S6).

2. The method (VM) according to claim 1, wherein in the sixth step (S6) further data characterising the reference model (M) and/or a crimp are stored, wherein the data comprise a time stamp and/or a location indication and/or ID information of the crimping device used and/or ID information of the operator and/or the predetermined number (n) and/or the predetermined cable (4) and/or the predetermined contact sleeve (3) and/or information about the evaluation of force/displacement curves (G3, G4) of faulty crimps.

3. The method (VM) according to claim 1 or 2, wherein a carrying out of the method (VM) at least from step (S1) to step (S4) is added to a number (N) of already completed carrying outs of the method (VM), and/or in step (S5) the tolerance range (T) is determined taking into account the number (N), and/or the further data characterising the reference model (M) and/or a crimp comprise the number (N).

4. A method (V) for checking the quality of a crimp of a predetermined cable (4) with a predetermined turned contact sleeve (3) and with a predetermined crimp height (H) with an indent crimp unit (2) of a crimping device (1), using a stored reference model (M) having a tolerance range (T) for checking the quality of a crimp, and using a sensor system (13,14) for measuring a force (F) and a displacement (X) of a device for actuating and/or applying pressure to the crimp unit (2) configured as an indent crimp unit (2) and an evaluation electronics unit (5)
wherein
as the reference model (M) a reference model (M) created with the method (VM) according to one of claims 1 to 3 is used, and wherein during crimping a force/displacement curve (G, G3, G4) is captured and displayed on a screen (50), comprising the steps:
- on the screen (50) together with the captured force/displacement curve (G, G3, G4) the stored reference model (M) is displayed, which has a first and second envelope curve (GH), which delimit the tolerance range (T);
- a comparison of the force/displacement curve (G, G3, G4) with the reference model (M) is carried out, wherein it is determined whether the force/displacement curve (G, G3, G4) lies within the tolerance range (T);
- from the comparison a statement about the quality of the crimp is made, wherein the quality of the crimp corresponds to a predetermined desirable quality if the force/displacement curve (G) lies within the tolerance range (T).

5. The method (V) according to claim 4, wherein the quality of the crimp is denied if the force/displacement curve (G3, G4) lies at least partially outside the tolerance range (T).

6. The method (V) according to claim 5, wherein from the comparison of the force/displacement curve (G3, G4) with the reference model (M) a qualitative fault analysis of the crimp is derived.

7. The method (V) according to one of claims 4 to 6, wherein the force/displacement curves (G, G3, G4) are used for updating the reference model (M), wherein step five (S5) and/or six (S6) of the method (VM) according to one of claims 1 to 3 is carried out, wherein a carrying out of a crimp is added to the predetermined number (n) and/or the number (N) of the method (VM) according to one of claims 1 to 3, and wherein the updating is carried out automatically and/or at the instigation of an operator.

8. The method (V, VM) according to one of claims 1 to 7, wherein the tolerance range (T) is variable as a function of the displacement (X) and/or the force (F).

9. The method (V, VM) according to one of claims 1 to 8 using at least one Hall sensor (13) for displacement measurement (X) and/or at least one piezo sensor (14) for force measurement (F).

10. The method (V, VM) according to one of claims 1 to 9, wherein the first and second envelope curve (GH) and the tolerance range (T) and the family of curves of (n) force/displacement curves (G) and the force/displacement curve (G, G3, G4) are each displayed on the screen (50) from a rest position (P0) of the crimp unit (2) to a position (P5) which corresponds to the set crimp height (H).

11. A crimping device (1) for checking the quality of a crimp of a predetermined cable (4) with a turned contact sleeve (3) using a sensor system (14) for measuring a force (F) of a device for actuating and/or applying pressure to a crimp unit (2) configured as an indent crimp unit (2), which is suitable for pressing the cable (4) with the contact sleeve (3), and with an evaluation electronics unit (5), wherein the crimping device (1) has a sensor system (13,14) for measuring a force (F) and a displacement (X) of the device for actuating and/or applying pressure to the crimp unit (2) and a screen (50), so that during crimping a force/displacement curve (G, G3, G4) is captured and displayed on a screen (50), having the features: the device for actuating the crimp unit (2) has a pneumatic pressure device with a cylinder (10) and a piston (11), which is in operative connection with the crimp unit (2) via a lever (130); for setting a predetermined crimp height (H) an adjustment mechanism (12) is provided; the crimping device (1) is suitably configured for carrying out a method (V, VM) according to one of claims 1 to 10 by means of a software program provided on the evaluation electronics unit (5).

12. The crimping device (1) according to claim 11 with at least one Hall sensor (13) for displacement measurement (X) and/or at least one piezo sensor (14) for force measurement (F).

13. The crimping device (1) according to claim 11 or 12, wherein the crimp unit (2) is a two-mandrel crimp unit and particularly preferably a four-mandrel crimp unit.

14. Use of a reference model (M) according to one of claims 1 to 3 for monitoring the quality of a crimp with a method (V) according to one of claims 4 to 10 using a first crimping device (1) according to one of claims 11 to 13, wherein the reference model (M) was created using a second crimping device (1) according to one of claims 11 to 13.

15. The use according to claim 14, wherein the reference model (M) is adapted to the characteristics of the first crimping device (1) by means of updating the reference model (M) according to the method (V) according to one of claims 4 to 10 and/or according to the method (VM) according to one of claims 1 to 3, and wherein for carrying out the method (V) and the method (VM) routines of the software program provided on the evaluation electronics unit (5) are used.

## Revendications

1. Procédé (VM) pour créer un modèle de référence (M) présentant une plage de tolérance (T) pour vérifier la qualité d'un sertissage d'un câble prédéterminé (4) avec une douille de contact tournée prédéterminée (3) et avec une hauteur de sertissage prédéterminée (H) avec une unité de sertissage par indentation (2) d'un dispositif de sertissage (1), en utilisant un système de capteurs (13, 14) pour mesurer une force (F) et un déplacement (X ) d'un dispositif d'actionnement et/ou d'application de pression de l'unité de sertissage (2) conçue comme une unité de sertissage par indentation (2) et une électronique d'évaluation (5), dans lequel un nombre prédéterminé de sertissages de référence est effectué, dont les résultats sont contrôlés et enregistrés en termes de qualité de sertissage ; et dans lequel pendant le sertissage une courbe force/déplacement (G, G3, G4) est acquise et affichée sur un écran (50), comprenant les étapes suivantes :
- réalisation d'un sertissage d'un câble (4) avec une douille de contact (3) et acquisition et affichage d'une courbe force/déplacement (G, G3, G4) du sertissage sur l'écran (50) dans une première étape (S1) ;
- évaluation de la qualité du sertissage par un opérateur au moyen d'un examen visuel et/ou en utilisant des moyens de contrôle appropriés dans une deuxième étape (S2) ;
- utilisation d'une courbe force/déplacement (G) d'un sertissage évalué positivement avec une qualité prédéterminée pour une famille de courbes force/déplacement (G) avec un nombre prédéterminé (n) de courbes force/déplacement (G) dans une troisième étape (S3) ;
- répétition de la première (S1), deuxième (S2) et troisième (S3) étape avec un autre câble (4) avec une autre douille de contact (3), jusqu'à ce que le nombre prédéterminé (n) soit atteint, dans une quatrième étape (S4) ;
- détermination de la plage de tolérance (T) avec une tolérance prédéterminée en tenant compte de la qualité prédéterminée et/ou de la hauteur de sertissage prédéterminée (H) et/ou du câble prédéterminé (4) et/ou de la douille de contact prédéterminée (3) et/ou du nombre prédéterminé (n) au moyen de la définition d'une première et d'une deuxième courbe enveloppe (GH), qui délimitent la famille de courbes force/déplacement (G) et la plage de tolérance (T) dans une cinquième étape (S5) ;
- dans lequel la plage de tolérance (T) est définie de manière variable en fonction du déplacement (X) et/ou de la force (F), de sorte qu'une évaluation particulièrement précise d'un sertissage et de la courbe force/déplacement (G) qui le caractérise est possible ;
- enregistrement de la première et de la deuxième courbe enveloppe (GH) et/ou de la plage de tolérance (T) et/ou de la famille de (n) courbes force/déplacement (G) en tant que modèle de référence (M) pour utilisation dans un procédé (V) de vérification de la qualité d'un sertissage, dans lequel une courbe force/déplacement (G, G3, G4) d'un sertissage est affichée sur un écran (50), et en particulier pour l'affichage conjoint du modèle de référence (M) et de la courbe force/déplacement (G, G3, G4) sur l'écran (50) dans une sixième étape (S6).

2. Procédé (VM) selon la revendication 1, dans lequel dans la sixième étape (S6) d'autres données caractérisant le modèle de référence (M) et/ou un sertissage sont mémorisées, dans lequel les données comprennent un horodatage et/ou une indication de lieu et/ou des informations d'identification du dispositif de sertissage utilisé et/ou des informations d'identification de l'opérateur et/ou le nombre prédéterminé (n) et/ou le câble prédéterminé (4) et/ou la douille de contact prédéterminée (3) et/ou des informations sur l'évaluation de courbes force/déplacement (G3, G4) de sertissages défectueux.

3. Procédé (VM) selon la revendication 1 ou 2, dans lequel une exécution du procédé (VM) au moins de l'étape (S1) à l'étape (S4) est ajoutée à un nombre (N) d'exécutions déjà effectuées du procédé (VM), et/ou dans l'étape (S5) la plage de tolérance (T) est déterminée en tenant compte du nombre (N), et/ou les autres données caractérisant le modèle de référence (M) et/ou un sertissage comprennent le nombre (N).

4. Procédé (V) pour vérifier la qualité d'un sertissage d'un câble prédéterminé (4) avec une douille de contact tournée prédéterminée (3) et avec une hauteur de sertissage prédéterminée (H) avec une unité de sertissage par indentation (2) d'un dispositif de sertissage (1), en utilisant un modèle de référence mémorisé (M) présentant une plage de tolérance (T) pour vérifier la qualité d'un sertissage, et en utilisant un système de capteurs (13,14) pour mesurer une force (F) et un déplacement (X) d'un dispositif d'actionnement et/ou d'application de pression de l'unité de sertissage (2) conçue comme une unité de sertissage par indentation (2) et une électronique d'évaluation (5) dans lequel
comme modèle de référence (M) un modèle de référence (M) créé avec le procédé (VM) selon l'une des revendications 1 à 3 est utilisé, et dans lequel pendant le sertissage une courbe force/déplacement (G, G3, G4) est acquise et affichée sur un écran (50), comprenant les étapes suivantes :
- sur l'écran (50) est affiché conjointement avec la courbe force/déplacement acquise (G, G3, G4) le modèle de référence mémorisé (M), qui présente une première et une deuxième courbe enveloppe (GH), qui délimitent la plage de tolérance (T) ;
- une comparaison de la courbe force/déplacement (G, G3, G4) avec le modèle de référence (M) est effectuée, dans laquelle il est déterminé si la courbe force/déplacement (G, G3, G4) se situe dans la plage de tolérance (T) ;
- à partir de la comparaison une déclaration sur la qualité du sertissage est émise, dans laquelle la qualité du sertissage correspond à une qualité souhaitée prédéterminée, lorsque la courbe force/déplacement (G) se situe dans la plage de tolérance (T).

5. Procédé (V) selon la revendication 4, dans lequel la qualité du sertissage est niée, lorsque la courbe force/déplacement (G3, G4) se situe au moins partiellement en dehors de la plage de tolérance (T).

6. Procédé (V) selon la revendication 5, dans lequel à partir de la comparaison de la courbe force/déplacement (G3, G4) avec le modèle de référence (M) une analyse qualitative des défauts du sertissage est dérivée.

7. Procédé (V) selon l'une des revendications 4 à 6, dans lequel les courbes force/déplacement (G, G3, G4) sont utilisées pour la mise à jour du modèle de référence (M), dans lequel l'étape cinq (S5) et/ou six (S6) du procédé (VM) selon l'une des revendications 1 à 3 est effectuée, dans lequel une exécution d'un sertissage est ajoutée au nombre prédéterminé (n) et/ou au nombre (N) du procédé (VM) selon l'une des revendications 1 à 3, et dans lequel la mise à jour est effectuée de manière automatisée et/ou à l'initiative d'un opérateur.

8. Procédé (V, VM) selon l'une des revendications 1 à 7, dans lequel la plage de tolérance (T) est variable en fonction du déplacement (X) et/ou de la force (F).

9. Procédé (V, VM) selon l'une des revendications 1 à 8 en utilisant au moins un capteur à effet Hall (13) pour la mesure du déplacement (X) et/ou au moins un capteur piézoélectrique (14) pour la mesure de la force (F).

10. Procédé (V, VM) selon l'une des revendications 1 à 9, dans lequel la première et la deuxième courbe enveloppe (GH) et la plage de tolérance (T) et la famille de (n) courbes force/déplacement (G) et la courbe force/déplacement (G, G3, G4) sont respectivement affichées sur l'écran (50) d'une position de repos (P0) de l'unité de sertissage (2) jusqu'à une position (P5), qui correspond à la hauteur de sertissage réglée (H).

11. Dispositif de sertissage (1) pour vérifier la qualité d'un sertissage d'un câble prédéterminé (4) avec une douille de contact tournée (3) en utilisant un système de capteurs (14) pour mesurer une force (F) d'un dispositif d'actionnement et/ou d'application de pression d'une unité de sertissage (2) conçue comme une unité de sertissage par indentation (2), qui est adaptée pour le sertissage du câble (4) avec la douille de contact (3), et avec une électronique d'évaluation (5), dans lequel le dispositif de sertissage (1) présente un système de capteurs (13,14) pour mesurer une force (F) et un déplacement (X) du dispositif d'actionnement et/ou d'application de pression de l'unité de sertissage (2) et un écran (50), de sorte que pendant le sertissage une courbe force/déplacement (G, G3, G4) est acquise et affichée sur un écran (50), avec les caractéristiques suivantes : le dispositif d'actionnement de l'unité de sertissage (2) présente un dispositif de pression pneumatique avec un cylindre (10) et un piston (11), qui est en liaison fonctionnelle avec l'unité de sertissage (2) par l'intermédiaire d'un levier (130) ; pour le réglage d'une hauteur de sertissage prédéterminée (H) un mécanisme de réglage (12) est prévu ; le dispositif de sertissage (1) est configuré de manière appropriée pour l'exécution d'un procédé (V, VM) selon l'une des revendications 1 à 10 au moyen d'un programme logiciel prévu sur l'électronique d'évaluation (5).

12. Dispositif de sertissage (1) selon la revendication 11 avec au moins un capteur à effet Hall (13) pour la mesure du déplacement ( X) et/ou au moins un capteur piézoélectrique (14) pour la mesure de la force (F).

13. Dispositif de sertissage (1) selon la revendication 11 ou 12, dans lequel l'unité de sertissage (2) est une unité de sertissage à deux poinçons et de manière particulièrement préférée une unité de sertissage à quatre poinçons.

14. Utilisation d'un modèle de référence (M) selon l'une des revendications 1 à 3 pour la surveillance de la qualité d'un sertissage avec un procédé (V) selon l'une des revendications 4 à 10 en utilisant un premier dispositif de sertissage (1) selon l'une des revendications 11 à 13, dans laquelle le modèle de référence (M) a été créé en utilisant un deuxième dispositif de sertissage (1) selon l'une des revendications 11 à 13.

15. Utilisation selon la revendication 14, dans laquelle le modèle de référence (M) est adapté aux caractéristiques du premier dispositif de sertissage (1) au moyen d'une mise à jour du modèle de référence (M) conformément au procédé (V) selon l'une des revendications 4 à 10 et/ou conformément au procédé (VM) selon l'une des revendications 1 à 3, et dans laquelle pour l'exécution du procédé (V) et du procédé (VM) des routines du programme logiciel fourni sur l'électronique d'évaluation (5) sont utilisées.
